# DEMANDE DE BREVET EUROPEEN

(11) **EP 1 684 068 A1**
(43) Date de publication de la demande: **26.07.2006**
(21) Numéro de dépôt: 05356015.7
(22) Date de dépôt: 25.01.2005
(51) Int. Cl.: G01N 30/06, G01N 30/72

(54) **Méthode d'analyse de composés pesticides**

(71) Demandeur: Bayer CropScience S.A., 69009 Lyon (FR)
(72) Inventeur: Rosati, Dominique, 01700 Neyron (FR); Venet, Catherine, 69210 St. Germaln Sur L'Abresle (FR)

(57) **Abrégé**

Méthode d'analyse d'un ou plusieurs composés pesticides présents en des quantités inférieures ou égales à 0,00005 mglkg d'un échantillon comprenant les étapes suivantes :
a) préparation de l'échantillon ;
b) dilution éventuelle de l'échantillon préparé ;
c) analyse directe de l'échantillon éventuellement dilué par chromatographie liquide à haute performance (HPLC) couplée à la spectrométrie de masse tandem (MS/MS).

## Description

La présente invention concerne le domaine des analyses de composés pesticides. De telles méthodes sont utiles pour le suivi du comportement de tels composés pesticides une fois qu'ils ont été appliqués, de telles méthodes sont également utiles lors des procédures d'autorisation de mise sur le marché de tels composés pesticides.
Les composés qui peuvent être analysés au moyen de la méthode d'analyse selon l'invention sont des composés utiles pour la protection des plantes ainsi que certains des composés métabolites de ces composés actifs biologiquement. Certains de ces métabolites peuvent également présenter des activités biologiques.

Des méthodes d'analyse de composés pesticides sont connues. Notamment, on connaît une méthode analytique pour la détermination de résidu de fosetyl-Al et de son principal métabolite l'acide phosphoreux dans l'eau de boisson ou dans l'eau de surface.
Une telle méthode connue utilise le (trimethylsilyl)diazomethane (TMSD) comme agent de dérivatisation.
Généralement, une telle méthode comprend les étapes suivantes :
- concentration des échantillons d'eau ;
- dérivatisation au (trimethylsilyl)diazomethane d'une aliquote de l'échantillon concentré (substitution d'un atome d'hydrogène par un groupement méthyle) ;
- purification de l'échantillon dérivatisé par partition liquide-liquide au dichlorométhane.

L'analyse est réalisée par chromatographie en phase gazeuse sur une colonne semi-capillaire au moyen d'un détecteur à photométrie de flamme (flame photometric detector ou FPD) en mode phosphore et la quantification prend comme référence des standards externes. L'utilisation d'un détecteur thermo-ionique est également possible.
Cette méthode connue est réalisée suivant le schéma 1 suivant :

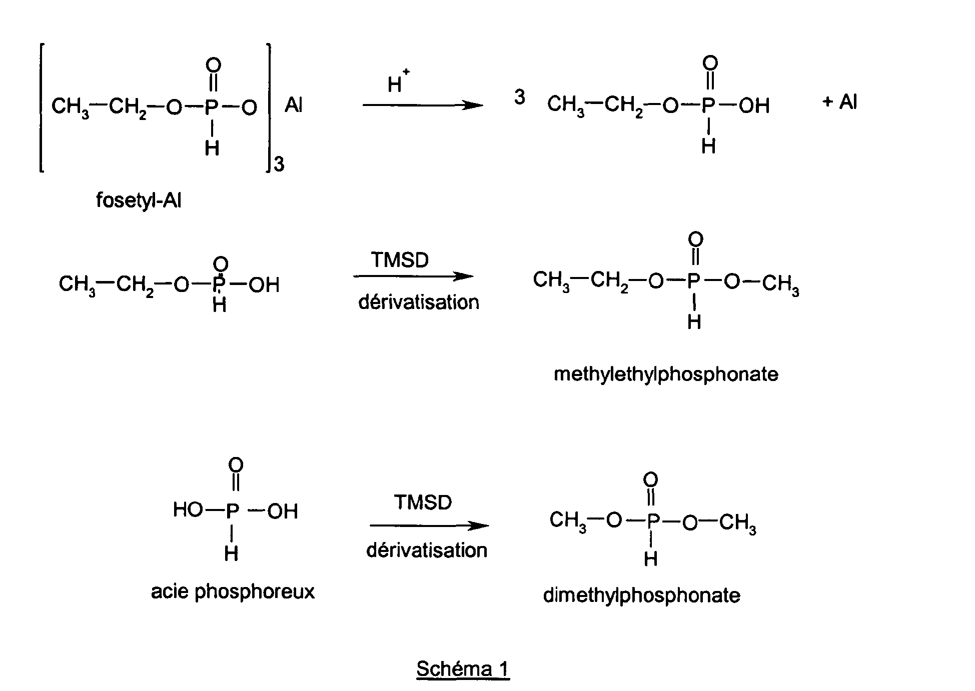

Par cette méthode les limites de détection (limit of detection ou LOD) sont les suivantes :
- pour le fosetyl-Al :
   - 0,05 µg/L pour l'eau de boisson (minérale ou de distribution) ;
   - 0,05 µg/L pour l'eau de surface (rivière) ;
- pour l'acide phosphoreux :
   - 0,7 µg/L pour l'eau de boisson (minérale ou de distribution) ;
   - 2,5 µg/L pour l'eau de surface (rivière).

Par cette méthode les limites de quantification (LOQ) sont les suivantes :
- pour le fosetyl-Al :
   - 0,1 µg/L pour l'eau de boisson (minérale ou de distribution) ;
   - 1 µg/L pour l'eau de surface (rivière) ;
- pour l'acide phosphoreux :
   - 2,0 µg/L pour l'eau de boisson (minérale ou de distribution) ;
   - 4,0 µg/L pour l'eau de surface (rivière).

Cette méthode d'analyse connue a été utilisée pour les substrats suivants : eau minérale, eau de distribution et eau du Rhône. La méthode d'analyse a été validée pour différents types d'eau par analyse d'échantillons témoins non traités enrichis en fosetyl-Al et en acide phosphoreux aux limites de quantification et à 10 fois ces limites.
L'analyse de ces échantillons enrichis fournit des valeurs de taux de récupération en fosetyl-Al ou en acide phosphoreux qui sont comparées aux valeurs théoriques attendues.

Comme autre méthode d'analyse connue, on peut citer une méthode d'analyse des résidus de fosetyl-Al ou d'acide phosphoreux présents dans des sols prélevés à Chazay d'Azergues (France), à Goch (Allemagne) et à Séville (Espagne).
Cette méthode utilise elle aussi le (trimethylsilyl)diazomethane. Elle est également réalisée suivant le schéma 1.
Au cours de cette méthode, les résidus de fosetyl-AI et d'acide phosphoreux sont extraits des échantillons de sol par agitation en présence d'une solution tampon d'ammoniac, puis les extraits sont débarrassés des cations présents au moyen d'une résine échangeuse d'ions et l'eau est évaporée des échantillons. Enfin, les extraits obtenus sont dérivatisés par action du (trimethylsilyl)diazomethane.
Ensuite la quantification est réalisée par chromatographie en phase gazeuse sur colonne semi-capillaire en utilisant un détecteur à photométrie de flamme (en mode phosphore) avec standard externe.
La limite de quantification (LOQ) de cette méthode est de 0,100 mg/kg pour chacun des composés.
Les échantillons témoins ont été enrichis en fosetyl-AI ou en acide phosphoreux jusqu'à la limite de quantification ainsi qu'à 100 fois cette limite.

Une autre méthode connue d'analyse de résidus concerne l'analyse de résidus de fosetyl-Al et d'acide phosphoreux dans des échantillons végétaux, tant issus de fruits que de légumes.
Cette méthode utilise elle aussi le (trimethylsilyl)diazomethane. Elle est également réalisée suivant le schéma 1.
Au cours de cette méthode, les résidus de fosetyl-AI et d'acide phosphoreux sont extraits des échantillons végétaux par broyage dans un mélange d'eau et d'acétonitrile. Les extraits sont ensuite purifiés en utilisant une cartouche C18 puis ils sont dérivatisés par action du (trimethylsilyl)diazomethane.
Ensuite la quantification est réalisée par chromatographie en phase gazeuse sur colonne semi-capillaire en utilisant un détecteur à photométrie de flamme (en mode phosphore) avec standard externe.

La limite de quantification de cette méthode connue est de 0,50 mg/kg pour chacun des produits, à l'exception du houblon pour lequel cette limite est 2,0 mg/kg pour le fosetyl-AI et 20,0 mg/kg pour l'acide phosphoreux.
Cette méthode a été mise en oeuvre sur des échantillons de grappes de raisin, d'oranges, de bananes, de fraises, de salade laitue, et de concombres. Les échantillons témoins ont été enrichis, notamment jusqu'à la limite de quantification.

Encore une autre méthode d'analyse connue de résidus concerne l'analyse de résidus de fosetyl-Al ou d'acide phosphoreux dans des tissus animaux ou des produits d'origine animale tels du lait, de la viande bovine, des reins de bovin, du foie de bovin ou des oeufs.
Selon cette étude, les résidus de composés à analyser sont extraits des échantillons par broyage à double reprise dans un mélange eau/acétonitrile (50/50, 20/80 pour le lait).
Une aliquote de l'extrait est ensuite purifiée au moyen d'une cartouche C18 (sauf pour le lait). L'extrait purifié est ensuite dérivatisé par une solution de TMSD.
Cette méthode d'analyse suit également le schéma 1.
La quantification est réalisée par chromatographie en phase gazeuse sur colonne DB Wax en utilisant un détecteur à photométrie de flamme en mode phosphore.
Les limites de quantification sont les suivantes :
- 0,50 mg/kg pour le fosetyl-Al et l'acide phosphoreux dans la viande bovine, le rein de bovin, le foie de bovin et les oeufs ;
- 0,10 mg/kg pour le fosetyl-Al et l'acide phosphoreux dans le lait.

Pour cette méthode, des échantillons de contrôle témoins non traités ont été préparés et analysés, de même que des échantillons enrichis à la limite de quantification ainsi qu'à plusieurs fois cette limite.

Les méthodes d'analyse connues qui viennent d'être évoquées sont conformes aux dispositions de la directive européenne n°46 de 1996 (96/46/EC du 16 juillet 1996), notamment pour les caractéristiques suivantes :
- pour chacun des substrats et chaque niveau :
   - la moyenne des taux de récupérations doit être comprise entre 70 et 110% ;
   - la répétabilité, exprimée en coefficient de variation (ratio de l'écart-type sur la moyenne pour l'échantillon concerné, exprimé en pourcentage) doit être au plus de 20% ;
- pour chacun des substrats, le coefficient de variation total (tous niveaux confondus) doit être au plus de 20%.

Une autre méthode connue d'analyse de fosetyl-AI est décrite dans un article intitulé *Rapid determination of fosetyl-AI residues in lettuce by liquid chromatographylelectrospray tandem mass spectrometry* (Hernandez et al., Journal of AOAC International, Vol.86, N°4, 2003).
La méthode décrite concerne la quantification de résidus de fosetyl-AI dans des échantillons végétaux qui sont issus de laitue. La méthode nécessite une étape d'extraction à l'eau au moyen d'un mélangeur à haute vitesse suivie de l'injection d'un extrait dilué 5 fois dans un chromatographe à phase liquide.
Le fosetyl-Al est donc quantifié par chromatographie liquide couplée à la spectrométrie de masse en tandem équipée d'une source de type electrospray après addition d'acétate de tetrabutylammonium comme agent d'appariement ionique.
L'analyse d'échantillons de laitue enrichis à 2 et 0,2 mg/kg est rapportée. La limite de quantification est de 0,2 mg/kg tandis que la limite de détection du fosetyl-Al est de 0,05 mg/kg.

Toutefois, pour nombre d'entre elles, ces méthodes d'analyse connues nécessitent une étape chimique de dérivatisation. Une telle étape supplémentaire complique l'analyse et en allonge très sensiblement la durée. De plus, la mise en oeuvre de cette étape nécessite une expertise spécifique et augmente le coût financier de ces méthodes.
En outre, lors d'une telle étape de dérivatisation, les agents de dérivatisation utilisés, qui peuvent être le TMSD, le diazomethane ou d'autres agents de dérivatisation alternatifs, sont des réactifs qui, en plus de leur prix élevé, présentent des risques importants lors de leur mise en oeuvre. Parmi les risques rencontrés lors de l'utilisation de tels agents de dérivatisation, on peut citer leur toxicité ainsi que leur explosivité. L'utilisation de tels agents a également pour conséquence un coût élevé.
Par ailleurs, ces méthodes connues comprennent de nombreuses étapes de manipulation (évaporations, re-dissolutions, transferts des échantillons) augmentant d'autant la perte et la dissémination des composés à analyser. Une telle dissémination de composés peut également poser le problème de son impact environnemental, notamment lors du retraitement des effluents issus de ces méthodes d'analyse.
De plus, ces méthodes connues présentent l'inconvénient majeur de ne pas être spécifiques à des composés particuliers. Ce manque de spécificité peut conduire à ne pas différencier des composés pour lesquels les caractéristiques de détection ou de quantification sont proches.
D'autres méthodes connues présentent le désavantage de ne permettre l'analyse que du seul fosetyl-Al sans pouvoir réaliser l'analyse simultanée de l'acide phosphoreux par exemple.

Certaines des méthodes connues ne sont décrites que pour des matrices particulières, par exemple une méthode déjà connue ne concerne que des tissus végétaux particuliers issus de laitue.
Enfin ces méthodes connues ne permettent pas d'atteindre certaines limites de quantification plus sévères, notamment les limites de quantification découlant de réglementations récentes, par exemple la directive 96/46/EC du 16 juillet 1996.

Il a maintenant été trouvé une méthode d'analyse qui permet d'apporter une solution à ces problèmes ou d'éviter ces inconvénients liés aux méthodes connues.

Ainsi la présente invention concerne une méthode d'analyse de résidus de composés pesticides.
La méthode selon l'invention peut convenir pour l'analyse de composés pesticides, qu'ils soient fongicides, herbicides, insecticides ou régulateurs de croissance.
De manière avantageuse, la méthode d'analyse selon l'invention est utilisée pour l'analyse de résidus de composés fongicides.
De manière particulièrement avantageuse, la méthode d'analyse selon l'invention est utilisée pour l'analyse de résidus de fosetyl-AI et de l'acide phosphoreux.
Le fosetyl-AI est un composé fongicide de type acide phosphonique dont le nom chimique est sel d'aluminium de l'acide ethyl-hydrogène phosphonique de formule

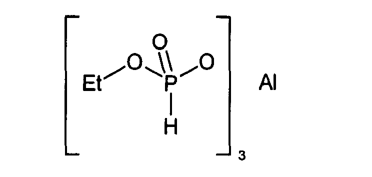

L'acide phosphoreux est de formule H₃PO₃.

Ainsi, entre autres avantages, la méthode d'analyse selon la présente invention est d'une grande simplicité. De plus cette méthode est directe et elle permet d'atteindre des niveaux de quantification des composés pesticides analysés jamais atteintes antérieurement.
La méthode selon l'invention est également particulièrement avantageuse d'un point de vue environnemental ainsi qu'économiquement.

De manière générale, la présente invention concerne une méthode d'analyse d'un ou plusieurs composés pesticides présents en des quantités inférieures ou égales à 0,00005 mg/kg, de manière préférée inférieures ou égales à 0,000005 mg/kg, de manière plus préférée inférieures ou égales à 0,0000005 mg/kg d'un échantillon comprenant les étapes suivantes :
- préparation de l'échantillon ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

Pour les échantillons liquides analysés selon la présente invention, les limites de quantification peuvent être exprimées en mg/L. L'homme du métier saura faire les conversions nécessaires.

La méthode d'analyse selon l'invention peut comprendre une étape de dilution de l'échantillon préparé.

La méthode d'analyse selon l'invention convient pour l'analyse simultanée de plusieurs composés pesticides qui peuvent être des composés fongicide, herbicide, insecticide ou régulateur de croissance.
De manière préférée, la méthode selon l'invention est mise en oeuvre pour l'analyse de composés fongicides choisis parmi l'acide phosphoreux ou l'un de ses dérivés ; l'acide phosphonique ou l'un de ses dérivés ; de préférence pour l'analyse du fosetyl ou de l'un ou plusieurs de ses sels ; de manière plus préférée pour l'analyse du fosetyl-Al ou de l'acide phosphoreux.
De manière particulièrement avantageuse, la méthode d'analyse selon l'invention est mise en oeuvre pour l'analyse simultanée de l'acide phosphoreux et du fosetyl-AI.

De manière préférée, la méthode d'analyse selon l'invention peut être mise en oeuvre pour l'analyse d'échantillons choisis parmi des tissus végétaux, de préférence une matrice végétale à haute teneur en eau, une matrice végétale à pH acide, une matrice végétale sèche, une matrice végétale grasse ; de l'eau, de préférence de l'eau minérale, souterraine, de distribution ou de surface ; des sols ; des produits ou tissus animaux, de préférence le lait, les oeufs, le foie, les reins, les graisses, le muscle ; de l'air ; des produits agro-alimentaires, de préférence transformés et des fluides corporels humains tels le sang et l'urine.

Pour la méthode d'analyse selon l'invention, l'étape de préparation peut être choisie parmi une extraction pour les tissus végétaux ; les sols ; les produits ou tissus animaux et les produits agro-alimentaires transformés ; une concentration éventuelle pour l'eau et un piégeage pour l'air.
Une telle étape de concentration pourra également être mise en oeuvre pour d'autres échantillons.

Pour la méthode d'analyse selon l'invention, l'étape de dilution peut être effectuée dans un solvant aqueux qui peut être acidifié, de préférence choisi parmi l'acide formique, l'acide acétique ou l'acide trifluoro-acétique ; ou dans un solvant organique, de préférence l'acétonitrile ou le méthanol, qui peut être acidifié ; ou encore dans un mélange de tels solvants.

Selon un premier aspect particulier de l'invention, elle concerne une méthode pour l'analyse d'un ou plusieurs composés pesticides présents en des quantités inférieures ou égales à 0,005 mg/kg, de préférence inférieures ou égales à 0,00005 mg/kg, plus préférentiellement inférieures ou égales à 0,0000005 mg/kg d'un échantillon d'eau comprenant les étapes suivantes :
- préparation de l'échantillon d'eau ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

La méthode d'analyse d'échantillon d'eau selon l'invention peut comprendre une étape de dilution de l'échantillon préparé.

La méthode d'analyse d'échantillon d'eau selon l'invention convient pour l'analyse simultanée de plusieurs composés pesticides qui peuvent être des composés fongicide, herbicide, insecticide ou régulateur de croissance.
De manière préférée, la méthode d'analyse d'échantillon d'eau selon l'invention est mise en oeuvre pour l'analyse de composés fongicides choisis parmi l'acide phosphoreux ou l'un de ses dérivés ; l'acide phosphonique ou l'un de ses dérivés ; de préférence pour l'analyse du fosetyl ou de l'un ou plusieurs de ses sels ; de manière plus préférée pour l'analyse du fosetyl-Al.
De manière particulièrement avantageuse, la méthode d'analyse d'échantillon d'eau selon l'invention est mise en oeuvre pour l'analyse simultanée de l'acide phosphoreux et du fosetyl-Al.

De manière préférée, la méthode d'analyse d'échantillon d'eau selon l'invention peut être mise en oeuvre pour l'analyse d'échantillons choisis parmi l'eau minérale, souterraine, de distribution ou de surface.

Pour la méthode d'analyse d'échantillon d'eau selon l'invention, l'étape de préparation peut être une concentration.

Pour la méthode d'analyse d'échantillon d'eau selon l'invention, l'étape de dilution peut être effectuée dans un solvant aqueux qui peut être acidifié, de préférence choisi parmi l'acide formique, l'acide acétique ou l'acide trifluoro-acétique ; ou dans un solvant organique, de préférence l'acétonitrile ou le méthanol, qui peut être acidifié ; ou encore dans un mélange de tels solvants.

Selon un deuxième aspect particulier de l'invention, elle concerne une méthode pour l'analyse d'un ou plusieurs composés pesticides présents en des quantités inférieures ou égales à 1 mg/kg, de préférence inférieures ou égales à 0,01 mg/kg, plus préférentiellement inférieures ou égales 0,001 mg/kg d'un échantillon de tissus végétaux comprenant les étapes suivantes :
- préparation de l'échantillon de tissus végétaux ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).
   La méthode d'analyse d'échantillon de tissus végétaux selon l'invention peut comprendre une étape de dilution de l'échantillon préparé.

La méthode d'analyse d'échantillon de tissus végétaux selon l'invention convient pour l'analyse simultanée de plusieurs composés pesticides qui peuvent être des composés fongicide, herbicide, insecticide ou régulateur de croissance.
De manière préférée, la méthode d'analyse d'échantillon de tissus végétaux selon l'invention est mise en oeuvre pour l'analyse de composés fongicides choisis parmi l'acide phosphoreux ou l'un de ses dérivés ; l'acide phosphonique ou l'un de ses dérivés ; de préférence pour l'analyse du fosetyl ou de l'un ou plusieurs de ses sels ; de manière plus préférée pour l'analyse du fosetyl-Al.
De manière particulièrement avantageuse, la méthode d'analyse d'échantillon de tissus végétaux selon l'invention est mise en oeuvre pour l'analyse simultanée de l'acide phosphoreux et du fosetyl-AI.

De manière préférée, la méthode d'analyse d'échantillon de tissus végétaux selon l'invention peut être mise en oeuvre pour l'analyse d'échantillons choisis parmi une matrice végétale à haute teneur en eau, une matrice végétale à pH acide, une matrice végétale sèche, une matrice végétale grasse.

La méthode d'analyse selon l'invention peut être mise en oeuvre pour l'analyse d'échantillon de plantes choisies parmi le blé, l'orge, la pomme de terre, le coton, les cultures protéagineuses, les cultures oléagineuses, le maïs, le lin, le riz, les cultures légumières, les arbres fruitiers, la vigne, la betterave.

Pour la méthode d'analyse d'échantillon de tissus végétaux selon l'invention, l'étape de préparation peut être une extraction des tissus végétaux. Cette étape de préparation peut également comporter une concentration de l'échantillon.

Pour la méthode d'analyse d'échantillon de tissus végétaux selon l'invention, l'étape de dilution peut être effectuée dans un solvant aqueux qui peut être acidifié, de préférence choisi parmi l'acide formique, l'acide acétique ou l'acide trifluoro-acétique ; ou dans un solvant organique, de préférence l'acétonitrile ou le méthanol, qui peut être acidifié ; ou encore dans un mélange de tels solvants.

Selon un troisième aspect particulier de l'invention, elle concerne une méthode pour l'analyse d'un ou plusieurs composés pesticides présents en des quantités inférieures ou égales à 5 mg/kg , de préférence inférieures ou égales à 0,05 mg/kg, plus préférentiellement inférieures ou égales à 0,005 mg/kg d'un échantillon de sol comprenant les étapes suivantes :
- préparation de l'échantillon de sol ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).
   La méthode d'analyse d'échantillon de sol selon l'invention peut comprendre une étape de dilution de l'échantillon préparé.

La méthode d'analyse d'échantillon de sol selon l'invention convient pour l'analyse simultanée de plusieurs composés pesticides qui peuvent être des composés fongicide, herbicide, insecticide ou régulateur de croissance.

De manière préférée, la méthode d'analyse d'échantillon de sol selon l'invention est mise en oeuvre pour l'analyse de composés fongicides choisis parmi l'acide phosphoreux ou l'un de ses dérivés ; l'acide phosphonique ou l'un de ses dérivés ; de préférence pour l'analyse du fosetyl ou de l'un ou plusieurs de ses sels ; de manière plus préférée pour l'analyse du fosetyl-Al.
De manière particulièrement avantageuse, la méthode d'analyse d'échantillon de sol selon l'invention est mise en oeuvre pour l'analyse simultanée de l'acide phosphoreux et du fosetyl-AI.

La méthode d'analyse d'échantillon de sol selon l'invention peut être mise en oeuvre pour l'analyse de tout type de sol, par exemple des sols argileux, sablonneux ou calcaires.
La méthode d'analyse de sol selon l'invention peut être mise en oeuvre pour des sols cultivés ou pour des sols nus, notamment avant culture ou après récolte.

Pour la méthode d'analyse d'échantillon de sol selon l'invention, l'étape de préparation peut être une extraction de l'échantillon de sol. Cette étape de préparation peut également comporter une concentration de l'échantillon.

Pour la méthode d'analyse d'échantillon de sol selon l'invention, l'étape de dilution peut être effectuée dans un solvant aqueux qui peut être acidifié, de préférence choisi parmi l'acide formique, l'acide acétique ou l'acide trifluoro-acétique ; ou dans un solvant organique, de préférence l'acétonitrile ou le méthanol, qui peut être acidifié ; ou encore dans un mélange de tels solvants.

Selon un quatrième aspect particulier de l'invention, elle concerne une méthode d'analyse d'un ou plusieurs composés pesticides présents en des quantités inférieures ou égales à 0,1 mg/m³, de préférence inférieures ou égales à 0,01 mg/m³, plus préférentiellement inférieures ou égales à 0,001 mg/m³ d'un échantillon d'air comprenant les étapes suivantes :
- préparation de l'échantillon d'air ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

La méthode d'analyse d'échantillon d'air selon l'invention peut comprendre une étape de dilution de l'échantillon préparé.

La méthode d'analyse d'échantillon d'air selon l'invention convient pour l'analyse simultanée de plusieurs composés pesticides qui peuvent être des composés fongicide, herbicide, insecticide ou régulateur de croissance.
De manière préférée, la méthode d'analyse d'échantillon d'air selon l'invention est mise en oeuvre pour l'analyse de composés fongicides choisis parmi l'acide phosphoreux ou l'un de ses dérivés ; l'acide phosphonique ou l'un de ses dérivés ; de préférence pour l'analyse du fosetyl ou de l'un ou plusieurs de ses sels ; de manière plus préférée pour l'analyse du fosetyl-Al.
De manière particulièrement avantageuse, la méthode d'analyse d'échantillon d'air selon l'invention est mise en oeuvre pour l'analyse simultanée de l'acide phosphoreux et du fosetyl-Al.

Pour la méthode d'analyse d'échantillon d'air selon l'invention, l'étape de préparation peut être un piégeage.

Pour la méthode d'analyse d'échantillon d'air selon l'invention, l'étape de dilution peut être effectuée dans un solvant aqueux qui peut être acidifié, de préférence choisi parmi l'acide formique, l'acide acétique ou l'acide trifluoro-acétique ; ou dans un solvant organique, de préférence l'acétonitrile ou le méthanol, qui peut être acidifié ; ou encore dans un mélange de tels solvants.

Selon un cinquième aspect particulier de l'invention, elle concerne une méthode d'analyse d'un ou plusieurs composés pesticides présents en des quantités inférieures ou égales à inférieures ou égales à 0,00005 mg/kg, de préférence inférieures ou égales à 0,000005 mg/kg, plus préférentiellement inférieures ou égales à 0,0000005 mg/kg d'un échantillon d'un fluide corporel humain comprenant les étapes suivantes :
- préparation de l'échantillon de fluide corporel humain ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).
   La méthode d'analyse d'un échantillon d'un fluide corporel humain selon l'invention peut comprendre une étape de dilution de l'échantillon préparé.

La méthode d'analyse d'un échantillon d'un fluide corporel humain selon l'invention convient pour l'analyse simultanée de plusieurs composés pesticides qui peuvent être des composés fongicide, herbicide, insecticide ou régulateur de croissance.

De manière préférée, la méthode d'analyse d'un échantillon d'un fluide corporel humain selon l'invention est mise en oeuvre pour l'analyse de composés fongicides choisis parmi l'acide phosphoreux ou l'un de ses dérivés ; l'acide phosphonique ou l'un de ses dérivés ; de préférence pour l'analyse du fosetyl ou de l'un ou plusieurs de ses sels ; de manière plus préférée pour l'analyse du fosetyl-Al.
De manière particulièrement avantageuse, la méthode d'analyse d'un échantillon d'un fluide corporel humain selon l'invention est mise en oeuvre pour l'analyse simultanée de l'acide phosphoreux et du fosetyl-Al.

De manière préférée, la méthode d'analyse d'un échantillon d'un fluide corporel humain selon l'invention peut être mise en oeuvre pour l'analyse d'un échantillon choisi parmi le sang et l'urine humains.

Pour la méthode d'analyse d'un échantillon d'un fluide corporel humain selon l'invention, l'étape de dilution peut être effectuée dans un solvant aqueux qui peut être acidifié, de préférence choisi parmi l'acide formique, l'acide acétique ou l'acide trifluoro-acétique ; ou dans un solvant organique, de préférence l'acétonitrile ou le méthanol, qui peut être acidifié ; ou encore dans un mélange de tels solvants.

Selon un sixième aspect particulier de l'invention, elle concerne une méthode d'analyse d'un ou plusieurs composés pesticides présents en des quantités inférieures ou égales à 1 mg/kg, de préférence inférieures ou égales à 0,01 mg/kg, plus préférentiellement inférieures ou égales à 0,001 mg/kg d'un échantillon de produits ou tissus animaux comprenant les étapes suivantes :
- préparation de l'échantillon de produits ou tissus animaux ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).
   La méthode d'analyse d'un échantillon de produits ou tissus animaux selon l'invention peut comprendre une étape de dilution de l'échantillon préparé.
   La méthode d'analyse d'un échantillon de produits ou tissus animaux selon l'invention convient pour l'analyse simultanée de plusieurs composés pesticides qui peuvent être des composés fongicide, herbicide, insecticide ou régulateur de croissance.
   De manière préférée, la méthode d'analyse d'un échantillon de produits ou tissus animaux selon l'invention est mise en oeuvre pour l'analyse de composés fongicides choisis parmi l'acide phosphoreux ou l'un de ses dérivés ; l'acide phosphonique ou l'un de ses dérivés ; de préférence pour l'analyse du fosetyl ou de l'un ou plusieurs de ses sels ; de manière plus préférée pour l'analyse du fosetyl-AI.
   De manière particulièrement avantageuse, la méthode d'analyse d'un échantillon de produits ou tissus animaux selon l'invention est mise en oeuvre pour l'analyse simultanée de l'acide phosphoreux et du fosetyl-Al.
   De manière préférée, la méthode d'analyse d'un échantillon de produits ou tissus animaux selon l'invention peut être mise en oeuvre pour l'analyse d'un échantillon choisi parmi le lait, les oeufs, le foie, les reins, les graisses, le muscle.
   Pour la méthode d'analyse d'un échantillon de produits ou tissus animaux selon l'invention, l'étape de dilution peut être effectuée dans un solvant aqueux qui peut être acidifié, de préférence choisi parmi l'acide formique, l'acide acétique ou l'acide trifluoro-acétique ; ou dans un solvant organique, de préférence l'acétonitrile ou le méthanol, qui peut être acidifié ; ou encore dans un mélange de tels solvants.
   Pour la méthode d'analyse d'un échantillon de produits ou tissus animaux selon l'invention, l'étape de préparation peut être une extraction des produits ou tissus animaux. Cette étape de préparation peut également comporter une concentration de l'échantillon.
   Selon un septième aspect particulier de l'invention, elle concerne une méthode d'analyse d'un ou plusieurs composés pesticides présents dans un échantillon de produit agro-alimentaire transformé. Cette méthode d'analyse d'un échantillon de produit agro-alimentaire transformé selon l'invention est similaire à la méthode d'analyse d'un échantillon de produits végétaux selon l'invention au sein de laquelle l'échantillon de produit végétal est remplacé par un échantillon de produit agro-alimentaire transformé.
   Les différentes étapes et préférences sont également similaires.
   Pour les différents aspects de l'invention, lors de l'étape d'analyse, les standards externes utilisés sont préparés en présence de matrice de même nature que l'échantillon à analyser.
   Les exemples qui suivent sont donnés à titre d'illustration des différents aspects de l'invention. Ces exemples ne sont pas limitatifs de l'étendue de l'invention. Notamment, l'homme du métier saura adapter ou modifier certaines des étapes de la méthode d'analyse selon l'invention en fonction des besoins particuliers auxquels il sera confronté. De telles modifications ou adaptations font partie de l'étendue de la présente invention.

### Exemple 1 :

Cet exemple concerne l'analyse de fosetyl-Al et d'acide phosphoreux à partir d'échantillons de tissus végétaux. Les matrices végétales sont issues de cultures : de concombre, d'orange, de salade laitue, de raisin et d'avocat.

### Mode opératoire pour la mise en oeuvre de la méthode d'analyse selon l'invention:

- 1.: Peser 20.0g d'échantillon de matrice végétale homogénéisé dans un flacon polypropylène de 125mL.
- 2.: Ajouter 80mL du mélange eau / acétonitrile (50/50, volume/volume).
- 3.: Broyer l'échantillon pendant 5 minutes à l'aide d'un broyeur type IKA T25.
- 4.: Centrifuger pendant 5 minutes à 3600 tours/minute à 5°C.
- 5.: Transférer le surnageant dans une fiole jaugée de 200mL.
- 6.: Reprendre le culot avec 80mL du mélange eau / acétonitrile (50/50, volume/volume).
- 7.: Broyer à nouveau l'échantillon pendant 5 minutes.
- 8.: Centrifuger pendant 5 minutes à 3600 tours/minute à 5°C.
- 9.: Transférer le surnageant dans la fiole jaugée de 200mL.
- 10.: Ajuster à 200mL à l'aide de méthanol.
- 11.: Centrifuger une aliquote d'environ 10mL pendant 10 minutes à 6000 tours/minute à température ambiante.
- 12.: Filtrer le surnageant sur un filtre PTFE (type Acrodisc CR 25mm, 0.45µm).
- 13.: Diluer le filtrat 5 fois à l'aide de méthanol acidifié à 0.5% d'acide formique.
- 14.: Analyser en chromatographie liquide à haute performance (HPLC) couplée à la spectrométrie de masse tandem (MS/MS) ou analyse LC/MS/MS.

Pour la mise en oeuvre de l'analyse, l'étalonnage est réalisé par standardisation externe. Les standards utilisés doivent être préparés dans une matrice de même nature que les échantillons objets de l'analyse particulière.

### Conditions analytiques pour l'étape 14 :

### Conditions de la chromatographie liquide à haute performance (HPLC) :

- Colonne :: Hypercarb, 100 x 3.0mm, 5µm
- Précolonne :: Phénoménex C18 ODS, 4 x 2.0mm
- Phase mobile :: eau acidifiée à 0.5% d'acide formique / méthanol (65/35, volume/volume) mode isocratique
- Débit :: 400µl/min
- Température de colonne :: ambiante
- Volume d'injection :: 20µL

Avant l'analyse, le système chromatographique est laissé à stabiliser durant 2 heures environ.

### Conditions de la spectrométrie de masse tandem (MS/MS) :

Détecteur : Triple quadripôle, type API4000 Sciex Instrument
Interface : TIS (Turbo Ion Spray)
Scan type : mode MRM (Multiple Reaction Monitoring)
Polarité : négative
Pression d'arrivée des gaz : Azote : 4 bars Air : 7.5 bars Air (exhaust) : 4 bars
Débit de gaz : Gaz nébulisateur (air, GS1) : 40 Turbo gaz (air, GS2) : 60 Gaz de protection (azote, CUR) : 20 Gaz de collision (azote, CAD) : 6
Haute tension TIS (IS) : -4500 V
Température de source : 600°C
Potentiel d'entrée (EP) : -10 V
Energie de collision :

| Composé composé | Ion Précurseur Q1 Mass (amu) | Ion Produit Q3 Mass (amu) | Dwell Time (msec) | Energie de collision (CE) (eV) | Potentiel de Déclusterisation (V) | Potentiel de sortie de la cellule de collision (CXP) (V) |
|---|---|---|---|---|---|---|
| Fosetyl-Al | 109.0 | 80.9 | 200 | -16 | -45 | -1 |
| | 109.0 | 63.0 | 200 | -38 | -45 | -5 |
| H₃PO₃ | 80.9 | 63.0 | 600 | -38 | -55 | -1 |
| | 80.9 | 78.9 | 600 | -22 | -55 | -5 |

Lors de la mise en oeuvre de la méthode d'analyse selon l'invention, les étapes 1 à 12 concerne la préparation de l'échantillon, l'étape 13 concerne la dilution. Ainsi, l'étape 14 concerne l'analyse LC/MS/MS de l'échantillon de matrice végétale préalablement préparé puis dilué.

Les résultats obtenus à partir de l'analyse de différentes matrices végétales sont détaillés dans les tableaux qui suivent dans lesquels CV indique le coefficient de variation. Ces résultats ont été obtenus à partir d'échantillons témoins qui ont été enrichis en fosetyl-Al et en acide phosphoreux aux limites de quantification (0,1 mg/kg pour l'acide phosphoreux et 0,01 mg/kg pour le fosetyl-Al) et à 10 fois ces limites.

**Concombre - acide phosphoreux**

| **Niveau de quantification mg/kg** | **Taux de récupération [%]** | | | | | **Moyenne [%]** | **CV [%]** |
|---|---|---|---|---|---|---|---|
| 0.100 | 83 | 82 | 82 | 91 | 95 | 87 | 7.0 |
| 1.000 | 102 | 102 | 101 | 97 | 99 | 100 | 2.2 |
| | **CV total [%]** | | | | | 93 | 8.9 |

**Concombre - fosetyl-Al**

| **Niveau de quantification mg/kg** | **Taux de récupération [%]** | | | | | **Moyenne [%]** | **CV [%]** |
|---|---|---|---|---|---|---|---|
| 0.010 | 95 | 96 | 98 | 98 | 95 | 96 | 1.6 |
| 0.100 | 106 | 101 | 101 | 99 | 100 | 101 | 2.7 |
| | **CV total [%]** | | | | | 99 | 3.4 |

**Orange ― acide phosphoreux**

| **Niveau de quantification mg/kg** | **Taux de récupération [%]** | | | | | **Moyenne [%]** | **CV [%]** |
|---|---|---|---|---|---|---|---|
| 0.100 | 65 | 99 | 70 | 78 | 67 | 76 | 18.3 |
| 1.000 | 97 | 99 | 101 | 95 | 99 | 98 | 2.3 |
| | **CV total [%]** | | | | | 87 | 17.3 |

**Orange - fosetvl-AI**

| **Niveau de quantification mg/kg** | **Taux de récupération [%]** | | | | | **Moyenne [%]** | **CV [%]** |
|---|---|---|---|---|---|---|---|
| 0.010 | 102 | 100 | 98 | 87 | 97 | 97 | 6.0 |
| 0.100 | 96 | 95 | 94 | 90 | 86 | 92 | 4.5 |
| | **CV total [%]** | | | | | 95 | 5.6 |

**Laitue - acide phosphoreux**

| **Niveau de quantification mg/kg** | **Taux de récupération [%]** | | | | | **Moyenne [%]** | **CV [%]** |
|---|---|---|---|---|---|---|---|
| 0.100 | 82 | 94 | 76 | 79 | 74 | 81 | 9.7 |
| 1.000 | 103 | 108 | 98 | 106 | 107 | 104 | 3.9 |
| | **CV total [%]** | | | | | 93 | 14.7 |

**Laitue ― fosetyl-Al**

| **Niveau de quantification mg/kg** | **Taux de récupération [%]** | | | | | **Moyenne [%]** | **CV [%]** |
|---|---|---|---|---|---|---|---|
| 0.010 | 104 | 98 | 109 | 113 | 114 | 108 | 6.2 |
| 0.100 | 102 | 106 | 104 | 107 | 107 | 105 | 2.1 |
| | **CV total [%]** | | | | | 106 | 4.5 |

**Raisin ― acide phosphoreux**

| **Niveau de q**uantification **mg/kg** | **Taux de récupération** [%] | | | | | **Moyenne** [%] | **CV** [%] |
|---|---|---|---|---|---|---|---|
| 0.100 | 96 | 94 | 113 | 100 | 92 | 99 | 8.5 |
| 1.000 | 100 | 105 | 104 | 101 | 101 | 102 | 2.1 |
| | **CV total** [%] | | | | | 101 | 6.0 |

**Raisin ― fosetyl-Al**

| **Niveau de quantification mg/kg** | **Taux de récupération [%]** | | | | | **Moyenne [%]** | **CV [%]** |
|---|---|---|---|---|---|---|---|
| 0.010 | 102 | 102 | 95 | 101 | 100 | 100 | 2.9 |
| 0.100 | 101 | 102 | 102 | 102 | 100 | 101 | 0.9 |
| | **CV total [%]** | | | | | 101 | 2.1 |

**Avocat - acide phosphoreux**

| **Niveau de quantification mg/kg** | **Taux de récupération [%]** | | | | | **Moyenne [%]** | **CV [%]** |
|---|---|---|---|---|---|---|---|
| 0.100 | 74 | 77 | 68 | 70 | 75 | 73 | 5.1 |
| 1.000 | 110 | 97 | 92 | 103 | 100 | 100 | 6.7 |
| | **CV total [%]** | | | | | 87 | 17.8 |

**Avocat ― fosetyl-Al**

| **Niveau de quantification** mg/kg | **Taux de récupération [%]** | | | | | **Moyenne [%]** | **CV [%]** |
|---|---|---|---|---|---|---|---|
| 0.010 | 104 | 95 | 92 | 94 | 93 | 96 | 5.0 |
| 0.100 | 88 | 88 | 85 | 89 | 86 | 87 | 1.9 |
| | **CV total [%]** | | | | | 91 | 6.1 |

### Exemple 2 :

Cet exemple concerne également l'analyse de fosetyl-Al et d'acide phosphoreux à partir d'échantillons de tissus végétaux. Les matrices végétales sont issues de cultures de blé.
Cet exemple reprend les conditions de l'exemple 1 jusqu'à l'étape 9 puis les étapes 10 à 14 de l'exemple 1 sont remplacées par les étapes suivantes :
- 10.: Ajouter 1 mL d'acide formique pur et ajuster à 200mL à l'aide de méthanol.
- 11.: Centrifuger une aliquote d'environ 10mL pendant 10 minutes à 6000 tours/minute à température ambiante.
- 12.: Diluer le surnageant 2 fois à l'aide de méthanol acidifié à 0.5% d'acide formique.
- 13.: Filtrer sur un filtre PTFE (type Acrodisc CR 25mm, 0.45µm).
- 14.: Analyser en chromatographie liquide à haute performance (HPLC) couplée à la spectrométrie de masse tandem (MS/MS) ou analyse LC/MS/MS.

Pour le reste, cet exemple est identique à l'exemple 1.

Les résultats obtenus à partir de l'analyse d'échantillon de blé sont détaillés dans le tableau qui suit dans lequel CV indique le coefficient de variation.
Ces résultats ont été obtenus à partir d'échantillons témoins qui ont été enrichis en fosetyl-Al et en acide phosphoreux aux limites de quantification (0,1 mg/kg pour l'acide phosphoreux et 0,01 mg/kg pour le fosetyl-Al) et à 10 fois ces limites.

**Blé ― acide phosphoreux**

| **Niveau de quantification mg/kg** | **Taux de récupération [%]** | | | | | **Moyenne [%]** | **CV [%]** |
|---|---|---|---|---|---|---|---|
| 0.100 | 90 | 94 | 101 | 102 | 103 | 98 | 5.8 |
| 1.000 | 77 | 77 | 81 | 79 | 81 | 79 | 2.5 |
| | **CV total [%]** | | | | | 89 | 12.2 |

**Blé - fosetvl-AI**

| **Niveau de quantification** mg/kg | **Taux de récupération [%]** | | | | | **Moyenne [%]** | **CV [%]** |
|---|---|---|---|---|---|---|---|
| 0.010 | 86 | 92 | 93 | 85 | 82 | 88 | 5.4 |
| 0.100 | 75 | 79 | 69 | 71 | 71 | 73 | 5.5 |
| | **CV total [%]** | | | | | 80 | 10.9 |

Pour ces deux exemples, les résultats obtenus sont conformes aux dispositions réglementaires (96/46/EC du 16 juillet 1996).
De plus, ces résultats ont permis d'atteindre des limites de quantifications inférieures aux limites accessibles par les méthodes connues antérieurement.
Ces exemples démontrent également la simplicité et la plus grande sécurité de la méthode selon l'invention.

## Revendications

1. Méthode d'analyse d'un ou plusieurs composés pesticides présents en des quantités inférieures ou égales à 0,00005 mg/kg d'un échantillon comprenant les étapes suivantes :
- préparation de l'échantillon ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

2. Méthode selon la revendication 1 comprenant une étape de dilution de l'échantillon préparé.

3. Méthode selon l'une ou l'autre des revendications 1 et 2 pour l'analyse d'un ou plusieurs composés pesticides présents en des quantités inférieures ou égales à 0,000005 mg/kg d'échantillon.

4. Méthode selon l'une ou l'autre des revendications 1 à 3 pour l'analyse d'un ou plusieurs composés pesticides présents en des quantités inférieures ou égales à 0,0000005 mg/kg d'échantillon.

5. Méthode selon l'une ou l'autre des revendications 1 à 4 pour laquelle l'échantillon est choisi parmi des tissus végétaux ; de l'eau ; des sols ; des produits ou tissus animaux ; de l'air ; des produits agro-alimentaires et des fluides corporels humains tels le sang et l'urine.

6. Méthode selon l'une ou l'autre des revendications 1 à 5 pour laquelle l'échantillon est choisi parmi une matrice végétale à haute teneur en eau, une matrice végétale à pH acide, une matrice végétale sèche, une matrice végétale grasse ; l'eau minérale, souterraine, de distribution ou de surface ; le lait, les oeufs, le foie, les reins, les graisses, le muscle ; des produits agro-alimentaires transformés ; les fluides corporels humains tels le sang et l'urine.

7. Méthode selon l'une ou l'autre des revendications 1 à 6 pour laquelle la préparation est choisie parmi une extraction pour les tissus végétaux ; les sols ; les produits ou tissus animaux et les produits agro-alimentaires transformés ; une concentration éventuelle pour l'eau et un piégeage pour l'air.

8. Méthode pour l'analyse d'un ou plusieurs composés pesticides présents en des quantités inférieures ou égales à 0,005 mg/kg d'un échantillon d'eau comprenant les étapes suivantes :
- préparation de l'échantillon d'eau ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

9. Méthode d'analyse selon la revendication 8 pour l'analyse de quantités inférieures ou égales à 0,00005 mg/kg.

10. Méthode d'analyse selon l'une ou l'autre des revendications 8 et 9 pour l'analyse de quantités inférieures ou égales à 0,0000005 mg/kg.

11. Méthode selon l'une ou l'autre des revendications 8 à 10 pour laquelle l'échantillon est choisi parmi l'eau minérale, souterraine, de distribution ou de surface.

12. Méthode selon l'une ou l'autre des revendications 8 à 11 pour laquelle la préparation est une concentration éventuelle de l'eau.

13. Méthode pour l'analyse d'un ou plusieurs composés pesticides présents en des quantités inférieures ou égales à 1 mg/kg d'un échantillon de tissus végétaux comprenant les étapes suivantes :
- préparation de l'échantillon de tissus végétaux ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

14. Méthode d'analyse selon la revendication 13 pour l'analyse de quantités inférieures ou égales à 0,01 mg/kg.

15. Méthode d'analyse selon l'une ou l'autre des revendications 13 et 14 pour l'analyse de quantités inférieures ou égales à 0,001 mg/kg.

16. Méthode selon l'une ou l'autre des revendications 13 à 15 pour laquelle l'échantillon est choisi parmi une matrice végétale à haute teneur en eau, une matrice végétale à pH acide, une matrice végétale sèche, une matrice végétale grasse.

17. Méthode selon l'une ou l'autre des revendications 13 à 16 pour laquelle la préparation est une extraction des tissus végétaux.

18. Méthode pour l'analyse d'un ou plusieurs composés pesticides présents en des quantités inférieures ou égales à 5 mg/kg d'un échantillon de sol comprenant les étapes suivantes :
- préparation de l'échantillon de sol ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

19. Méthode d'analyse selon la revendication 18 pour l'analyse de quantités inférieures ou égales à 0,05 mg/kg.

20. Méthode d'analyse selon l'une ou l'autre des revendications 18 et 19 pour l'analyse de quantités inférieures ou égales à 0,005 mg/kg.

21. Méthode selon l'une ou l'autre des revendications 18 à 20 pour laquelle l'échantillon est choisi parmi un sol argileux, sablonneux ou calcaire.

22. Méthode selon l'une ou l'autre des revendications 18 à 21 pour laquelle la préparation est une extraction de l'échantillon de sol.

23. Méthode d'analyse d'un ou plusieurs composés pesticides présents en des quantités inférieures ou égales à 0,1 mg/m³ d'un échantillon d'air comprenant les étapes suivantes :
- préparation de l'échantillon ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

24. Méthode selon l'une ou l'autre des revendications 23 et 24 pour l'analyse d'un ou plusieurs composés pesticides présents en des quantités inférieures ou égales à 0, 01 mg/m³ d'échantillon.

25. Méthode selon l'une ou l'autre des revendications 23 à 24 pour l'analyse d'un ou plusieurs composés pesticides présents en des quantités inférieures ou égales à 0,001 mg/m³ d'échantillon.

26. Méthode selon l'une ou l'autre des revendications 23 à 25 pour laquelle la préparation est un piégeage.

27. Méthode d'analyse d'un ou plusieurs composés pesticides présents en des quantités inférieures ou égales à 0,00005 mg/kg d'un échantillon d'un fluide corporel humain comprenant les étapes suivantes :
- préparation de l'échantillon ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

28. Méthode selon l'une ou l'autre des revendications 27 et 28 pour l'analyse d'un ou plusieurs composés pesticides présents en des quantités inférieures ou égales à 0,000005 mg/kg d'échantillon.

29. Méthode selon l'une ou l'autre des revendications 27 à 28 pour l'analyse d'un ou plusieurs composés pesticides présents en des quantités inférieures ou égales à 0,0000005 mg/kg d'échantillon.

30. Méthode selon l'une ou l'autre des revendications 27 à 29 pour laquelle l'échantillon est choisi parmi le sang et l'urine humains.

31. Méthode pour l'analyse d'un ou plusieurs composés pesticides présents en des quantités inférieures ou égales à 1 mg/kg d'un échantillon de produits ou tissus animaux comprenant les étapes suivantes :
- préparation de l'échantillon de produits ou tissus animaux ;
- dilution éventuelle de l'échantillon préparé ;
- analyse directe de l'échantillon éventuellement dilué par chromatographie liquide à haute performance (HPLC) couplée à la spectrométrie de masse tandem (MS/MS).

32. Méthode d'analyse selon la revendication 31 pour l'analyse de quantités inférieures ou égales à 0,01 mg/kg.

33. Méthode d'analyse selon l'une ou l'autre des revendications 31 et 32 pour l'analyse de quantités inférieures ou égales à 0,001 mg/kg.

34. Méthode selon l'une ou l'autre des revendications 31 à 33 pour laquelle l'échantillon est choisi parmi le lait, les oeufs, le foie, les reins, les graisses, le muscle.

35. Méthode selon l'une ou l'autre des revendications 31 à 34 pour laquelle la préparation est une extraction des produits ou tissus animaux.

36. Méthode selon l'une ou l'autre des revendications 13 à 17 pour laquelle les tissus végétaux sont remplacés par des produits agro-alimentaires transformés.

37. Méthode selon l'une ou l'autre des revendications 1 à 36 comprenant une étape de dilution de l'échantillon préparé.

38. Méthode selon l'une ou l'autre des revendications 1 à 37 pour l'analyse simultanée de plusieurs composés pesticides.

39. Méthode selon l'une ou l'autre des revendications 1 à 38 pour l'analyse d'un ou plusieurs composés fongicide, herbicide, insecticide ou régulateur de croissance.

40. Méthode selon l'une ou l'autre des revendications 1 à 39 pour l'analyse de composés fongicides choisis parmi l'acide phosphoreux ou l'un de ses dérivés ; l'acide phosphonique ou l'un de ses dérivés.

41. Méthode selon la revendication 40 pour l'analyse du fosetyl ou de l'un ou plusieurs de ses sels.

42. Méthode selon la revendication 41 pour l'analyse du fosetyl-Al.

43. Méthode selon l'une ou l'autre des revendications 1 à 42 pour l'analyse simultanée de l'acide phosphoreux et du fosetyl-AI.

44. Méthode selon l'une ou l'autre des revendications 1 à 43 pour laquelle la dilution est effectuée dans un solvant aqueux qui peut être acidifié ou dans un solvant organique qui peut être acidifié ou dans un mélange de tels solvants.

45. Méthode selon la revendication 44 pour laquelle le solvant aqueux comprend un acide choisi parmi l'acide formique, l'acide acétique ou l'acide trifluoro-acétique ou que le solvant organique est choisi parmi l'acétonitrile ou le méthanol.
